Europäisches Patentamt

(19) European Patent Office

Office européen des brevets

(11) Numéro de publication: **0 097 590**
**B1**

(12) **FASCICULE DE BREVET EUROPEEN**

(45) Date de publication du fascicule du brevet:
**17.09.86**

(21) Numéro de dépôt: **83401253.6**

(22) Date de dépôt: **17.06.83**

(51) Int. Cl.⁴: **F 16 C 39/06,** H 01 J 35/10,
H 02 K 7/09

(54) **Dispositif de suspension magnétique d'un rotor placé dans une enceinte étanche.**

(30) Priorité: **17.06.82 FR 8210600**

(43) Date de publication de la demande:
**04.01.84 Bulletin 84/1**

(45) Mention de la délivrance du brevet:
**17.09.86 Bulletin 86/38**

(84) Etats contractants désignés:
**CH DE GB IT LI SE**

(56) Documents cités:
**FR - A - 1 186 527
FR - A - 2 165 633
FR - A - 2 452 782
FR - A - 2 456 383
US - A - 3 235 757**

(73) Titulaire: **SOCIETE EUROPEENNE DE PROPULSION
(S.E.P.) Société Anonyme dite:, 3, avenue du Général de
Gaulle, F-92800 Puteaux (FR)**

(72) Inventeur: **Brunet, Maurice, Le Bout aux Roussel,
F-27950 St Marcel (FR)**

(74) Mandataire: **Thevenet, Jean-Bruno, Cabinet BEAU DE
LOMENIE 55 rue d'Amsterdam, F-75008 Paris (FR)**

## Description

La présente invention concerne un dispositif de suspension magnétique d'un rotor placé dans une enceinte étanche, comprenant au moins deux paliers électromagnétiques radiaux actifs asservis à l'aide de détecteurs de position pour supporter le rotor sans contact, chaque palier comportant une armature annulaire en matériau magnétique feuilleté montée sur le rotor et un stator composé d'enroulements d'électro-aimants associés à une culasse en matériau magnétique feuilleté qui présente des pièces polaires d'extrémité disposées à faible distance de l'armature annulaire, mais sans contact avec celle-ci, et les enroulements d'électro-aimants étant tous disposés à l'extérieur de l'enceinte étanche.

On connaît déjà, notamment par le brevet français 1 186 527, la mise en œuvre de paliers électromagnétiques destinés à supporter un ensemble devant tourner à grande vitesse à l'intérieur d'une enceinte étanche.

Selon le brevet français précité, chacun des paliers électromagnétiques est constitué par un jeu de quatre électro-aimants identiques régulièrement répartis autour de la position théorique de l'axe de l'arbre, chacun des électro-aimants comportant un bobinage et une culasse ou armature présentant des pièces polaires disposées en regard de la paroi périphérique d'un rotor feuilleté de manière à exercer une attraction radiale sur ce rotor. Des détecteurs de position associés à une chaîne électronique permettent de réguler l'excitation des électro-aimants de palier de manière à ramener l'axe du rotor vers sa position d'équilibre qui constitue ainsi une position d'équilibre stable.

Dans l'agencement décrit dans le brevet français 1 186 527, la paroi de l'enceinte étanche est parfaitement continue et passe dans les entrefers des liaisons magnétiques qui existent entre l'ensemble tournant et les organes fixes des paliers électromagnétiques.

Si la paroi étanche continue est réalisée en un matériau neutre du point de vue magnétique, tel que du verre, l'entrefer réel entre les pièces polaires des stators de palier magnétique et les rotors feuilletés constituant les armatures de ces paliers, ne peut être réduit à des valeurs suffisamment faibles pour permettre un fonctionnement satisfaisant en pratique, surtout lorsqu'il s'agit d'une machine de relativement faibles dimensions.

Si, en revanche la paroi étanche continue est réalisée entièrement en un matériau magnétique, celle-ci constitue un court-circuit magnétique tout le long de l'enceinte et perturbe le fonctionnement des paliers, des détecteurs et du motor électrique.

On a également proposé, par exemple dans la demande de brevet français 2 452 782, de réaliser des culasses de stator de palier magnétique qui traversent la paroi étanche d'un tube à rayons X. Selon ce mode de réalisation, les enroulements d'électro-aimant sont disposés à l'extérieur du tube, tandis que les pièces polaires de la culasse pénètrent profondément à l'intérieur du tube pour former un entrefer à l'intérieur de ce dernier. Dans ce cas, les enroulements d'électro-aimants se trouvent trop éloignés de l'entrefer et les fuites magnétiques sont élevées, de sorte que ce montage n'est pas non plus satisfaisant.

Par ailleurs, avec une machine devant comporter une enceinte étanche, il n'est pas non plus possible d'utiliser des culasses d'électro-aimant classiques en matériau feuilleté dont les pièces polaires viendraient en affleurement dans des ouvertures ménagées dans la paroi de l'enceinte, car la minceur des tôles de la culasse empêche de réaliser le raccordement de celles-ci de façon étanche.

La présente invention a précisément pour but de réaliser une suspension électromagnétique permettant le support sans contact d'un rotor placé dans une enceinte étanche, avec un entrefer de faible largeur et des pertes réduites de manière à être applicable à des dispositifs de relativement petites dimensions et à présenter une consommation d'énergie relativement limitée.

Ces buts sont atteints, selon la présente invention, grâce à un dispositif du type défini en tête de la description dans lequel, conformément à l'invention, chaque culasse de stator en matériau feuilleté est prolongée au niveau des pièces polaires d'extrémité par une partie terminale en matériau magnétique non feuilleté, de faible épaisseur, qui constitue directement une portion de la paroi de l'enceinte étanche et est raccordée par soudage aux parties de paroi étanche non magnétique qui ne sont pas situées en regard de l'armature annulaire, l'entrefer d'un palier électromagnétique étant déterminé par ladite armature annulaire et la face interne à l'enceinte de ladite partie terminale formant partie de paroi étanche.

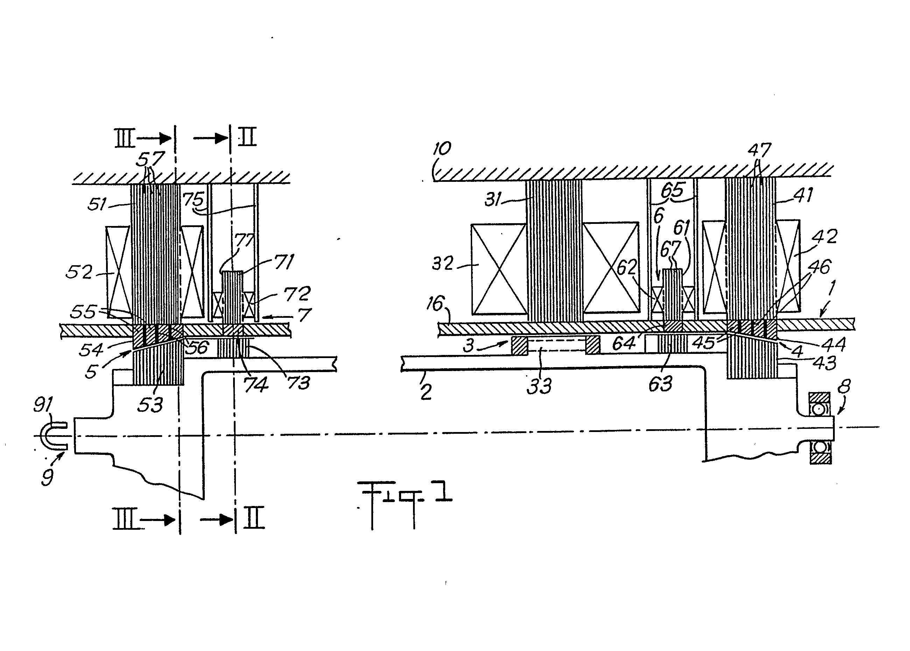

Selon un premier mode de réalisation de l'invention, les parties terminales des pièces polaires d'extrémité sont constituées par un ensemble de petites pièces massives réalisées en matériau magnétique de résistivité élevée, et de perméabilité relative supérieure à environ 200, disposées parallèlement aux lignes du champ magnétique, et moulées dans du verre de manière à être raccordées de façon étanche à des parties en verre de la paroi 1 de l'enceinte étanche (voir fig. 1).

Lesdites petites pièces massives comprennent une largeur comprise entre environ 2 et 3 mm, tandis que le matériau magnétique feuilleté de la culasse 41 est composé de tôles dont l'épaisseur est comprise entre environ 0,3 et 0,4 mm, lesdites petites pièces massives sont séparées les unes des autres parallèlement au champ magnétique par une couche de verre dont l'épaisseur est de l'ordre de quelques dixièmes de millimètre.

Selon un autre mode de réalisation de l'invention, les parties terminales des pièces polaires d'extrémité sont constituées par une chemise formée par une tôle en un matériau magnétique de résistivité élevée et de perméabilité supérieure à environ 200, disposée perpendiculairement

aux lignes du champ magnétique et raccordée par soudage de façon étanche à des parties en verre ou en métal de la paroi de l'enceinte étanche.

Les parties terminales présentent une épaisseur de l'ordre de 0,3 et 0,5 mm et sont réalisées à l'aide d'un alliage ferromagnétique à forte teneur en métaux nobles tel que de l'invar ou du supraanhyster.

Selon une caractéristique avantageuse de la présente invention, les détecteurs de position sont de type électromagnétique et comprennent une armature annulaire en matériau magnétique feuilleté montée sur le rotor et un stator composé d'enroulements d'électro-aimants disposés à l'extérieur de l'enceinte étanche et associés à une culasse en matériau magnétique feuilleté qui présente des pièces polaires d'extrémité prolongées par une partie terminale en matériau magnétique non feuilleté qui constitue directement une portion de la paroi de l'enceinte étanche et se trouve raccordée par soudage à des parties de paroi contiguës en verre.

De préférence, la partie terminale, des détecteurs de position est constituée par un barreau de ferrite ou d'acier fretté à grains isolés.

Selon une autre caractéristique particulière de l'invention les parties terminales constituées par une tôle magnétique sont raccordées à des parties de paroi en verre par l'intermédiaire de tronçons de paroi étanche qui présentent des ondulations capables d'absorber des différences de dilatation des tronçons de paroi en verre et en métal.

Le dispositif selon l'invention peut en particulier être appliqué au montage d'un arbre d'anode tournante de tube à rayons X et dans ce cas comprend en outre un moteur électrique asynchrone comprenant un rotor solidaire de l'arbre d'entraînement de l'anode et un stator situé à l'extérieur de l'enceinte étanche dont la partie située en regard du moteur électrique est en verre, et un détecteur axial de la position de l'arbre, lequel détecteur axial comprend un stator composé d'enroulements associés à une culasse en matériau magnétique feuilleté dont les pièces polaires d'extrémité sont prolongées par une partie terminale en matériaux magnétique non feuilleté qui constitue directement une paroi de l'enceinte étanche et se trouve raccordée par soudage à des parties de paroi contiguës en verre.

Dans le cas d'une telle application, les paliers électromagnétiques sont avantageusement de type conique et l'anode est de préférence portée au potentiel de la masse.

A titre d'exemple, l'entrefer entre les parties terminales des pièces polaires d'extrémité des culasses de stator des paliers électromagnétiques et les armatures annulaires correspondantes est compris entre environ 0,4 et 0,8 mm.

D'autres caractéristiques et avantages de l'invention ressortiront de la description qui fait suite de modes particuliers de réalisation, donnés à titre d'exemple, en référence au dessin annexé, sur lequel:

– la fig. 1 est une vue schématique en demicoupe axiale d'un premier mode de réalisation de suspension électromagnétique pour un rotor placé à l'intérieur d'une enceinte étanche,

– la fig. 2 est une vue en coupe selon la ligne II–II de la fig. 1 montrant la structure d'un détecteur de position radiale,

– la fig. 3 est une vue en coupe selon la ligne II–III de la fig. 1 montrant la structure d'un palier électromagnétique radial, et

– la fig. 4 est une vue en coupe axiale d'un second mode de réalisation de suspension électromagnétique, appliqué au montage d'une anode tournante dans un tube à rayons X.

On voit sur la fig. 1 un rotor 2 disposé à l'intérieur d'une enceinte 1 étanche et supporté sans contact à l'aide de paliers électromagnétiques 4 et 5 dont les stators sont montés sur bâti 10. Un moteur électrique asynchrone 3 pour l'entraînement du rotor 2 comporte un induit 33 composé de barres conductrices en cuivre s'étendant parallèlement à l'axe du rotor 2 et logées à la périphérie de celui-ci, et un inducteur ou stator comportant un noyau 31 formé d'un empilement de tôles ferromagnétiques de faible épaisseur et associé à des bobines d'excitation 32. L'induit 33 solidaire du rotor 2 est disposé à l'intérieur de l'enceinte 1 tandis que le noyau 31 solidaire du bâti 10 et les bobines d'excitation 32 sont disposés à l'extérieur de l'enceinte 1 qui, dans sa partie située en regard du moteur 3, comprend une paroi 16 réalisée en un matériau isolant tel que du verre. L'extrémité des tôles du noyau 31 vient en contact avec la paroi 16 dont l'épaisseur peut être par exemple de l'ordre de 1 à 2 mm. L'espace libre entre la paroi 16 et l'induit 33 peut lui aussi consister en un écartement de l'ordre de 1 mm. Avec de telles valeurs numériques, l'entrefer total entre l'extrémité du noyau 31 et l'induit 33 permet un fonctionnement convenable du moteur d'entraînement 3.

Des détecteurs 6, 7 de la position radiale du rotor 2 sont associés aux paliers magnétiques 4, 5 et à des circuits d'asservissement, non représentés, pour stabiliser la position du rotor 2 qui est supporté exclusivement par des moyens électromagnétiques, le palier à billes 8 n'étant présent qu'en tant que palier de secours et présentant un jeu transversal légèrement inférieur au plus petit jeu existant entre le rotor 2 d'une part et les stators des paliers magnétiques 4, 5 du moteur 3 et des détecteurs radiaux 6, 7, d'autre part. Les paliers électromagnétiques 4, 5 sont du type biconique et présentent des entrefers délimités par deux surfaces tronconiques de sorte que ces paliers peuvent exercer un centrage du rotor à la fois dans le sens radial et dans le sens axial, sans butée axiale supplémentaire. Un détecteur axial 9 de la position du rotor coopère avec les détecteurs radiaux 6 et 7 pour permettre l'asservissement de la position du rotor 2 à l'aide des paliers 4 et 5.

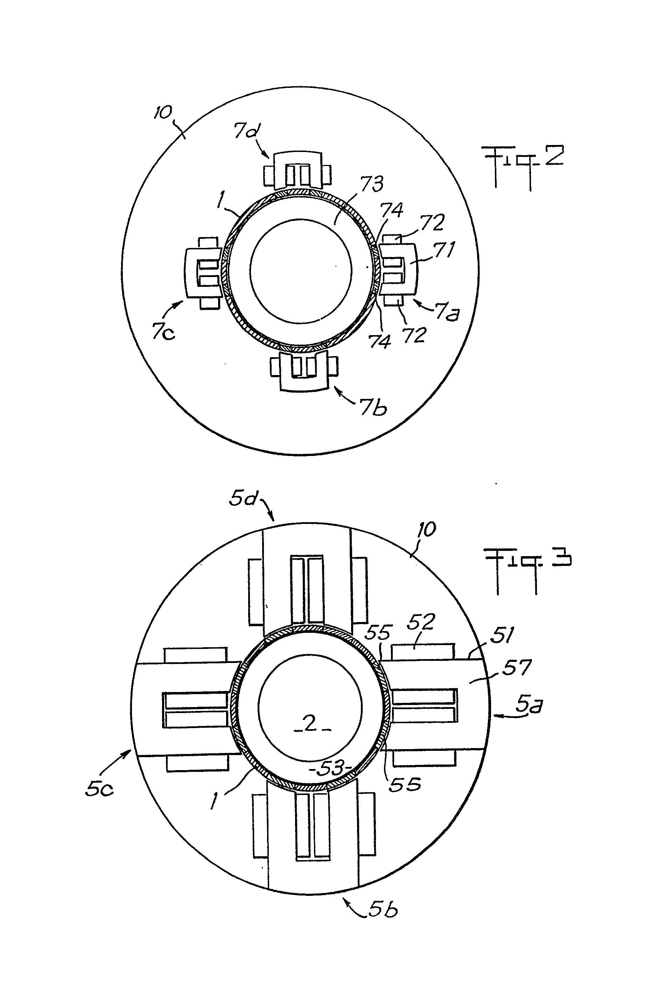

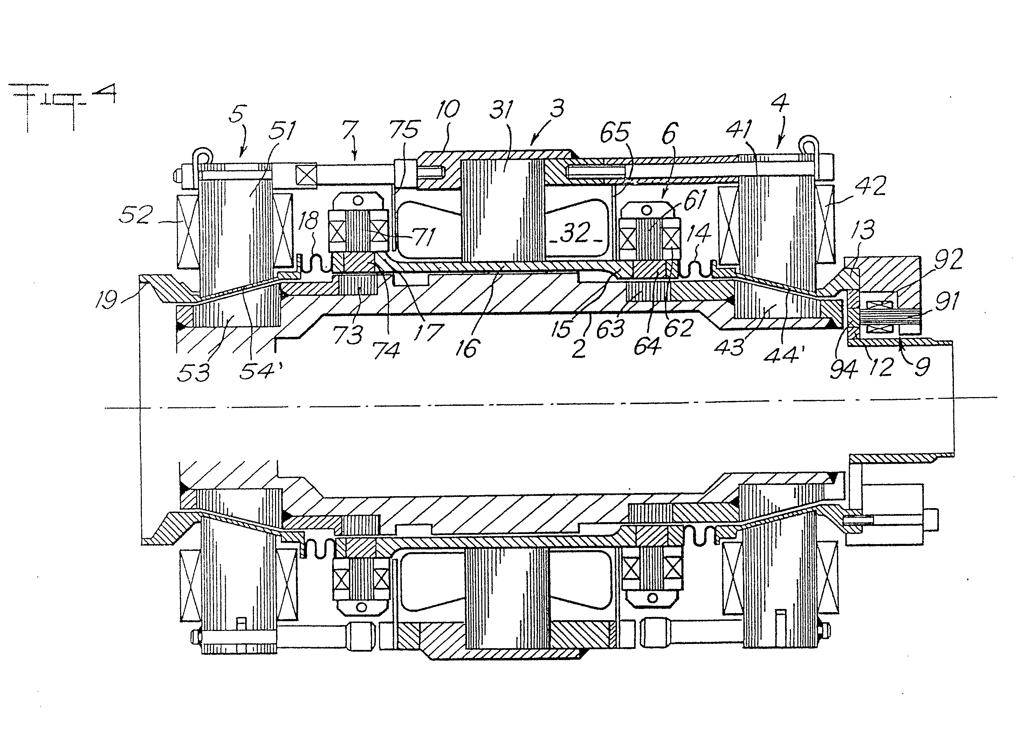

Si l'on considère maintenant les fig. 1 et 3, on voit que les paliers magnétiques 4, 5 comprennent chacun une armature annulaire 43, 53 en matériau ferromagnétique feuilleté montée sur le rotor 2, et un stator 41, 51 fixé au bâti 10. Le stator 41, 51 est constitué par quatre électro-aimants identiques tels que 5a, 5b, 5c, 5d régulièrement répartis autour de la position théorique de l'axe de l'arbre 2, chacun des électro-aimants comportant un bobinage 42, 52 et une culasse 41, 51 en forme de U définissant des pièces polaires qui viennent en regard de l'armature annulaire correspondante 43, 53 pour permettre la fermeture des lignes du flux magnétique, un entrefer étant réalisé entre les faces polaires de l'extrémité de la culasse 41 du stator et l'armature annulaire 43, 53. Chaque culasse 41, 51 est réalisée en matériau magnétique feuilleté et comprend un empilement de tôles minces 47, 57 perpendiculaires à l'axe du rotor 2. Ces tôles minces, par exemple en fer doux, peuvent présenter une épaisseur comprise entre environ 0,3 et 0,4 mm. La division de la culasse 41, 51 parallèlement au champ magnétique est destinée de façon classique à limiter les pertes par courants de Foucault. Les enroulements 42, 52 sont disposés entièrement à l'extérieur de la paroi 1 de l'enceinte étanche à l'intérieur de laquelle est situé le rotor 2. Ceci évite que les revêtements isolants des bobines 42, 52 produisent des dégazages à l'intérieur de l'enceinte étanche 1 et affectent ainsi le fonctionnement des éléments disposés dans cette enceinte. Une enceinte étanche peut en effet être utilisée pour traiter des produits toxiques ou corrosifs, mais aussi pour travailler dans un vide poussé dont la qualité ne doit pas être affectée par la présence des paliers magnétiques.

Afin de limiter les fuites magnétiques, les pièces polaires de la culasse 41, 51 devraient arriver aussi près que possible de l'armature correspondante 43, 53 afin de former un entrefer de faible épaisseur. Toutefois, un noyau feuilleté peut difficilement traverser une paroi dont on veut conserver l'étanchéité. Par suite, selon l'invention, les pièces polaires sont prolongées par une partie terminale 44, 54 composée d'éléments massifs 45, 55 d'épaisseur substantielle, de l'ordre de 2 à 3 mm, réalisés en un matériau magnétique non feuilleté dont la résistivité et la perméabilité relative μ sont élevées. Ces éléments massifs 45, 55 peuvent être réalisés par exemple en un alliage Fe-Si à 3%. Les éléments massifs 45, 55 disposés à la suite de l'empilement de tôles feuilletées 47 sont moulés dans du verre qui peut ainsi constituer une mince couche isolante 46, 56 de quelques dixièmes de mm d'épaisseur dans le sens de l'axe du rotor 2, entre deux éléments massifs 45, 55. Le moulage des éléments ferromagnétiques massifs 45, 55 dans du verre permet de réaliser une continuité dans l'étanchéité de la paroi 1 en verre tout en permettant aux pièces polaires des culasses 41, 51 d'être prolongées, sans augmentation sensible des pertes magnétiques, à travers même la paroi de l'enceinte étanche et sur une faible longueur à l'intérieur de l'enceinte afin de définir avec l'armature annulaire correspondante 43, 53 un entrefer d'épaisseur réduite.

La partie terminale 44, 54 de chaque pôle peut comprendre trois ou quatre éléments massifs successifs 45, 55 dans le sens de l'axe du rotor mais peut aussi dans certains cas être monobloc si le matériau magnétique utilisé pour cette partie terminale présente une perméabilité magnétique suffisamment élevée.

Les fig. 1 et 2 montrent un exemple de détecteurs de position 5, 6 du type électromagnétique qui comprennent une armature annulaire 63, 73 en matériau ferromagnétique feuilleté disposée sur le rotor 2 et un stator composé d'une culasse 71 en matériau magnétique feuilleté montée sur un support 65, 75 fixé au bâti 10 et d'enroulements 72. Un détecteur 6 ou 7 peut être composé de quatre électro-aimants tels que 7a, 7b, 7c, 7d (fig. 2) régulièrement répartis autour de l'axe du rotor 2 et définissant quatre paires de pôles. Les pièces polaires 61, 71 constituées d'empilements de tôles magnétiques 67, 77 classiques viennent en affleurement sur la paroi étanche 1 et sont prolongées par une partie terminale 64, 74 en matériau magnétique non feuilleté qui constitue directement une portion de la paroi de l'enceinte étanche et se trouve raccordée par soudage à des parties de paroi contiguës en verre. La partie terminale 64, 74 peut être constituée de préférence par un barreau de ferrite particulièrement adapté à un fonctionnement du détecteur à des fréquences élevées de l'ordre de quelques dizaines de kHz.

Comme pour le cas de paliers magnétiques 4 et 5, l'entrefer des détecteurs 6 et 7 défini par les parties terminales 64, 74 et les armatures correspondantes 63, 73 peut être très limité, par exemple compris entre environ 0,4 et 0,8 mm.

On décrira maintenant un deuxième mode de réalisation en référence à la fig. 4. Les éléments correspondants du mode de réalisation de la fig. 1 et du mode de réalisation de la fig. 4 portent les mêmes références numériques.

Le dispositif de suspension magnétique de la fig. 4 comprend deux paliers électromagnétiques 4 et 5 capables de supporter sans contact un rotor 2 qui comporte un arbre 2 de support d'un élément tournant tel qu'une anode de tube à rayons X. Le rotor 2 porte à sa périphérie des armatures annulaires 43, 53 et 63, 73 en matériau magnétique feuilleté qui coopèrent avec les stators extérieurs à l'enceinte des paliers magnétiques 4 et 5 et des détecteurs de position 6, 7 respectivement. Des paliers de secours à billes, non représentés, peuvent également être associés au rotor 2 à l'intérieur de l'enceinte étanche.

La configuration du moteur 3 et celle des détecteurs 6, 7 de la position radiale du rotor 2 sont semblables à celles décrites en référence à la fig. 1. En revanche, les parties terminales 44', 54' des culasses 41, 51 des stators de palier magnétique diffèrent des parties terminales 44, 54.

Selon le mode de réalisation de la fig. 4 l'extrémité des pièces polaires des culasses feuilletées 41, 51 est chemisée à l'aide d'une tôle de faible épaisseur (de l'ordre de 0,3 à 0,5 mm) réalisée en un matériau ferromagnétique de forte perméabilité et de faible résistivité tel que de l'invar ou du supra-anhyster. Le chemisage qui s'étend au-delà des pièces polaires pour former une partie de paroi étanche 13, 19 constitue un court-circuit magnétique dont l'influence s'est avérée négligeable compte tenu de la faible épaisseur de cette tôle 44', 54' dans sa partie superposée aux pôles de la culasse 41. Par suite, dans la mesure où l'entrefer entre l'armature annulaire 43, 53 et la chemise formant partie terminale 44', 54' peut présenter une largeur extrêmement réduite, de l'ordre de 0,4 à 0,8 mm, chaque palier électromagnétique 4, 5 peut conserver toute son efficacité sur le plan magnétique tandis que l'étanchéité au niveau des stators 41, 51 est garantie puisqu'aucune tôle 47, 57 n'émerge à l'intérieur de l'enceinte étanche.

Les parties de paroi 13, 19 en matériau magnétique sont soudées à des tronçons de paroi étanche 14, 18 en alliage métallique qui forment des ondulations destinées à permettre l'absorption de différences de dilatations entre des tronçons de paroi en verre tels que 15, 17 et des tronçons de paroi métallique tels que 13, 19.

Un détecteur 9 (fig. 4) ou une paire de détecteurs 9 peuvent être disposés en regard d'une partie frontale du rotor 2 pour donner une information sur la position axiale de ce rotor. Le détecteur axial 9 peut, comme les détecteurs radiaux 6, 7, comprendre un stator composé d'une culasse feuilletée 91 associée à des enroulements 92 et prolongée par un barreau de ferrite 94 inséré dans un élément de paroi de verre 12.

On remarquera que, dans le cas d'une application à des tubes à rayons X, une suspension magnétique active de l'anode tournante permet notamment de réaliser une commande par anticipation de la valeur du courant appliqué aux enroulements de palier magnétique 4, 5 afin de tenir compte des efforts particuliers dûs à l'application de la haute tension (qui crée des perturbations du fait des forces capacitives qui apparaissent dans le tube) et entre autres à la décélération due à la butée de fin de course lors des arrêts du tube.

Par ailleurs, une suspension de type électromagnétique, qui n'implique aucun contact entre le rotor et le stators des paliers de support, permet, dans le cas de tubes à rayons X, un fonctionnement permanent par exemple, pendant une journée complète tandis que dans le cas de paliers à billes, afin d'éviter une usure prématurée, il est nécessaire de remettre en marche le tube à chaque opération d'utilisation, ce qui introduit chaque fois un temps de retard qui est une contrainte pour le praticien.

On notera que les culasses 41, 51 des stators d'électro-aimants peuvent le cas échéant présenter un faible entrefer supplémentaire réalisé parallèlement à l'axe du rotor entre les parties de la culasse portant les enroulements 42, 52 et les parties de la culasse voisines du chemisage constituant les parties terminales 44', 54'. Les tôles de culasse voisines des parties terminales 44', 54' peuvent alors être fixées sur ces dernières par collage par exemple, tandis que les parties de culasse portant les enroulements 42, 52 peuvent être réalisées pour la forme d'un assemblage unitaire facilement démontable par coulissement du fait que ces parties de culasse portant les enroulements 42, 52 ne présentent plus de partie conique. Si l'entrefer supplémentaire est de dimensions réduites, les performances des paliers magnétiques restent pratiquement inchangées.

**Revendications**

1. Dispositif de suspension magnétique d'un rotor placé dans une enceinte étanche, comprenant au moins deux paliers électromagnétiques radiaux actifs (4, 5) asservis à l'aide de détecteurs de position (6, 7) pour supporter le rotor sans contact, chaque palier comportant une armature annulaire (43, 53) en matériau magnétique feuilleté monté sur le rotor et un stator composé d'enroulements d'électro-aimants (42, 52) associés à une culasse (41, 51) en matériau magnétique feuilleté qui présente des pièces polaires d'extrémité disposées à faible distance de l'armature annulaire, mais sans contact avec celle-ci, et les enroulements d'électro-aimants (42, 52) étant tous disposés à l'extérieur de l'enceinte étanche, caractérisé en ce que chaque culasse (41, 51) de stator en matériau feuilleté est prolongée au niveau des pièces polaires d'extrémité par une partie terminale (44, 44' ; 54, 54') en matériau magnétique non feuilleté, de faible épaisseur, qui constitue directement une portion de la paroi (1) de l'enceinte étanche et est raccordée par soudage aux parties de paroi étanche non magnétique qui ne sont pas situées en regard de l'armature annulaire (43, 53), l'entrefer d'un palier électromagnétique étant déterminé par ladite armature annulaire (43, 53) et la face interne à l'enceinte de ladite partie terminale (44, 44' ; 54, 54') formant partie de paroi étanche.

2. Dispositif selon la revendication 1, caractérisé en ce que les parties terminales (44, 54) des pièces polaires d'extrémité sont constituées par un ensemble de petites pièces massives (45, 55) réalisées en matériau magnétique de résistivité élevée, et de perméabilité relative supérieure à environ 200, disposées parallèlement aux lignes du champ magnétique, et moulées dans du verre (46, 56) de manière à être raccordées de façon étanche à des parties en verre de la paroi (1) de l'enceinte étanche.

3. Dispositif selon la revendication 2, caractérisé en ce que lesdites petites pièces massives (45, 55) comprennent une largeur comprise entre environ 2 et 3 mm, tandis que le matériau magnétique feuilleté de la culasse (41) est composé de tôles (47) dont l'épaisseur est comprise entre environ 0,3 et 0,4 mm, et en ce que lesdites petites pièces massives (45, 55) sont séparées les unes des autres parallèlement au champ magnétique par une couche de verre dont l'épaisseur est de l'ordre de quelques dixièmes de millimètre.

4. Dispositif selon la revendication 3, caractérisé en ce que les parties terminales (44', 54') des pièces polaires d'extrémité sont constituées par une chemise formée par une tôle en un matériau magnétique de résistivité élevée et de perméabilité supérieure à environ 200, disposée perpendiculairement aux lignes du champ magnétique et raccordée par soudage de façon étanche à des parties en verre ou en métal de la paroi (1) de l'enceinte étanche.

5. Dispositif selon la revendication 4, caractérisé en ce que les parties terminales (44', 54') présentent une épaisseur de l'ordre de 0,3 à 0,5 mm et sont réalisées à l'aide d'un alliage ferromagnétique à forte teneur en métaux nobles tel que de l'invar ou du supra-anhyster.

6. Dispositif selon l'une quelconque des revendications 1 à 5, caractérisé en ce que les détecteurs de position (6, 7) sont de type électromagnétique et comprennent une armature annulaire (63, 73) en matériau magnétique feuilleté montée sur le rotor et un stator composé d'enroulements d'électro-aimants (62, 72) disposés à l'extérieur de l'enceinte étanche et associés à une culasse (61, 71) en matériau magnétique feuilleté qui présente des pièces polaires d'extrémité prolongées par une partie terminale (64, 74) en matériau magnétique non feuilleté qui constitue directement une portion de la paroi de l'enceinte étanche et se trouve raccordée par soudage à des parties de paroi contiguës en verre.

7. Dispositif selon la revendication 6, caractérisé en ce que la partie terminale (64, 74) des détecteurs de position (6, 7) est constituée par un barreau de ferrite.

8. Dispositif selon l'une quelconque des revendications 4 et 5, caractérisé en ce que les parties terminales (44', 54') constituées par une tôle magnétique sont raccordées à des parties de paroi en verre par l'intermédiaire de tronçons de paroi étanche (14, 18) qui présentent des ondulations capables d'absorber des différences de dilatation des tronçons de paroi en verre et en métal.

9. Dispositif selon l'une quelconque des revendications 1 à 8, appliqué au montage d'un arbre (2) d'anode tournante (21) de tube à rayons X, caractérisé en ce qu'il comprend en outre un moteur électrique (3) asynchrone comprenant un rotor (33) solidaire de l'arbre (2) d'entraînement de l'anode et un stator (31, 32) situé à l'extérieur de l'enceinte étanche dont la partie située en regard du moteur électrique est en verre, en ce que les paliers électromagnétiques (4, 5) sont du type conique, en ce qu'il comprend en outre un détecteur axial (9) de la position de l'arbre (2) lequel détecteur axial comprend un stator composé d'enroulements (92) associés à une culasse (91) en matériau magnétique feuilleté dont les pièces polaires d'extrémité sont prolongées par une partie terminale (94) en matériau magnétique non feuilleté qui constitue directement une paroi de l'enceinte étanche et se trouve raccordée par soudage à des parties de paroi contiguës en verre, et en ce que l'anode (21) est portée au potentiel de la masse.

10. Dispositif selon l'une quelconque des revendications 1 à 9, caractérisé en ce que l'entrefer entre les parties terminales (44, 44'; 54, 54') des pièces polaires d'extrémité des culasses (41, 51) de stator des paliers électro-magnétiques et les armatures annulaires correspondantes (43, 53) est compris entre environ 0,4 et 0,8 mm.

**Patentansprüche**

1. Magnetische Lagerung für einen Rotor in einem dichten Gehäuse, mit wenigstens zwei aktiven elektromagnetischen Radiallagern (4, 5), die mittels eines Positionsgebers (6, 7) geregelt werden, um den Rotor berührungsfrei zu tragen, wobei jedes Lager einen ringförmigen am Rotor befestigten Anker (43, 53) aus lamellenförmigem magnetischem Material und einen Stator aus Elektromagnetwicklungen (42, 52) aufweist, die mit einem Joch (41, 51) aus lamelliertem magnetischem Material verbunden sind, das Endpolstücke aufweist, die in geringem Abstand vom ringförmigen Anker, jedoch berührungsfrei hiermit, angeordnet sind, wobei alle Elektromagnetwicklungen (42, 52) ausserhalb des dichten Behälters angeordnet sind, dadurch gekennzeichnet, dass jedes Statorjoch (41, 51) aus lamelliertem Material an den Polendstücken durch ein Endteil (44, 44'; 54, 54') aus nicht laminiertem magnetischem Material von geringer Dicke verlängert ist, das unmittelbar einen Teil der Wand (1) des dichten Behälters bildet und durch Schweissen mit den nicht-magnetischen dichten Wandteilen verbunden ist, die sich nicht gegenüber dem ringförmigen Anker (43, 53) befinden, wobei der Spalt eines elektromagnetischen Lagers gegeben ist durch den ringförmigen Anker (43, 53) und die am Behälter innen gelegene Fläche des einen dichten Wandteil bildenden Endteils (44, 44'; 54, 54').

2. Vorrichtung nach Anspruch 1, dadurch gekennzeichnet, dass die Endteile (44, 54) der Endpolstücke aus einer Anordnung von kleinen massiven Teilen (45, 55) bestehen, die aus einem magnetischen Material mit einem hohen spezifischen Widerstand und mit einer relativen Permeabilität von über 200 hergestellt sind, die parallel zu den Magnetfeldlinien angeordnet und derart in Glas (46, 56) eingeformt sind, dass sie mit den aus Glas bestehenden Teilen der Wand (1) des dichten Behälters verbunden sind.

3. Vorrichtung nach Anspruch 2, dadurch gekennzeichnet, dass die kleinen massiven Teile (45, 55) eine Grösse von etwa 2 bis 3 mm haben, während das lamellierte magnetische Material des Jochs (41) aus Blechen (47) aufgebaut ist, deren Dicke zwischen 0,3 und 0,4 mm liegt, und dass die kleinen massiven Teile (45, 55) parallel zum Magnetfeld durch eine Glasschicht voneinander getrennt sind, deren Dicke in der Grössenordnung von einigen 10 mm liegt.

4. Vorrichtung nach Anspruch 3, dadurch gekennzeichnet, dass die Endteile (44', 54') der Endpolstücke aus einer Schürze bestehen, die durch ein Blech aus einem magnetischen Material mit einem hohen spezifischen Widerstand und mit einer Permeabilität von über etwa 200 gebildet ist, die senkrecht zu den Magnetfeldlinien angeordnet ist und die durch Schweissen mit den Teilen aus Glas oder Metall der Wand (1) des dichten Behälters dicht verbunden ist.

5. Vorrichtung nach Anspruch 4, dadurch gekennzeichnet, dass die Endteile (44', 54') eine Dicke in der Grössenordnung von 0,3 bis 0,5 mm haben und durch eine ferromagnetische Legierung hergestellt sind, die einen hohen Gehalt an Edelmetallen, wie Invar oder Supra-anhyster haben.

6. Vorrichtung nach einem der Ansprüche 1 bis 5, dadurch gekennzeichnet, dass die Positionsgeber (6, 7) von elektromagnetischer Bauart sind und einen am Rotor befestigten ringförmigen Anker (63, 73) aus lamelliertem magnetischem Material und einen Stator haben, der aus Wicklungen von Elektromagneten (62, 72) aufgebaut ist, die ausserhalb des dichten Behälters angeordnet und mit einem Joch (61, 71) aus lamelliertem magnetischem Material verbunden sind, das Endpolstücke aufweist, die durch ein Endteil aus nicht-lamelliertem magnetischem Material verlängert sind, das unmittelbar einen Teil der Wand des dichten Behälters bildet und durch Schweissen mit den angrenzenden Wandteilen aus Glas verbunden ist.

7. Vorrichtung nach Anspruch 6, dadurch gekennzeichnet, dass der Endteil (64, 74) der Positionsgeber (6, 7) aus einem Ferritstab besteht.

8. Vorrichtung nach einem der Ansprüche 4 und 5, dadurch gekennzeichnet, dass die aus einem magnetischen Blech bestehenden Endteile (44', 54') mit den Wandteilen aus Glas durch dichte Wandabschnitte (14, 18) mit Wellungen verbunden sind, die Dehnungsdifferenzen der Wandabschnitte aus Glas und Metall aufnehmen können.

9. Vorrichtung nach einem der Ansprüche 1 bis 8, angewendet bei der Montage einer rotierenden Anodenwelle (21) einer Röntgenstrahlröhre, dadurch gekennzeichnet, dass sie ausserdem einen elektrischen Synchronmotor (3) mit einem mit der Antriebswelle (2) der Anode fest verbundenen Motor (33) und einen ausserhalb des dichten Behälters befindlichen Stator aufweist, dessen gegenüber dem Elektromotor gelegener Teil aus Glas besteht, dass die elektromagnetischen Lager (4, 5) von konischer Bauart sind, dass sie ausserdem einen axialen Geber (9) für die Position der Welle (2) aufweist, welcher axialer Geber einen Stator aufweist, der aus Wicklungen (92) aufgebaut ist, die mit einem Joch (91) aus lamelliertem magnetischem Material verbunden sind, dessen Endpolstücke durch einen Endteil (94) aus nicht-lamelliertem magnetischem Material verlängert sind, das unmittelbar eine Wand des dichten Behälters bildet und durch Schweissen mit den angrenzenden Wandteilen aus Glas verbunden ist, und dass die Anode (21) auf das Potential der Masse gebracht ist.

10. Vorrichtung nach einem der Ansprüche 1 bis 9, dadurch gekennzeichnet, dass der Spalt zwischen den Endteilen (44, 44'; 54, 54') der Endpolstücke des Jochs (41, 51) des Stators der elektromagnetischen Lager und dem entsprechenden ringförmigen Anker (43, 53) etwa 0,4 bis 0,8 mm beträgt.

**Claims**

1. Magnetic suspension device for a rotor placed in a sealed enclosure, comprising at least two active radial electromagnetic bearings (4, 5) servocoupled by means of position detectors (6, 7) to support the rotor without contact, each bearing comprising an annular armature (43, 53) of laminated magnetic material mounted on the rotor and a stator composed of electromagnetic windings (42, 52) associated with a yoke (41, 51) of laminated magnetic material which has end pole pieces positioned at a short distance from the annular armature, but without contact with the latter, and the electromagnetic windings (42, 52) being all positioned outside the sealed enclosure, characterized in that each stator yoke (41, 51) of laminated material is extended to the level of the end pole pieces by a terminal portion (44, 44'; 54, 54') of non-laminated magnetic material, of little thickness, which constitutes directly a portion of the wall (1) of the sealed enclosure and is attached by welding to the portions of nonmagnetic fluid-tight wall which are not situated opposite the annular armature (43, 53), the air-gap of an electromagnetic bearing being determined by said annular armature (43, 53) and the surface within the enclosure of said terminal portion (44, 44'; 54, 54') forming part of the fluid-tight wall.

2. Device according to claim 1, characterized in that the terminal portions (44, 54) of the end pole pieces are constituted by a set of small solid pieces (45, 55) formed of a magnetic material of high resistivity and relative permeability greater than about 200, arranged parallel to the magnetic lines of force, and molded in glass (46, 56) so as to be attached in sealed manner to glass portions (1) of the wall of the sealed enclosure.

3. Device according to claim 2, characterized in that said small solid pieces (45, 55) have a width comprised between about 2 and 3 mm, whilst the laminated magnetic material of the yoke (41) is composed of sheet metal (47) whose thickness is comprised between about 0.3 and 0.4 mm, and in that said small solid parts (45, 55) are separated from one another parallel to the magnetic field by a glass layer whose thickness is of the order of some tenths of a millimeter.

4. Device according to claim 3, characterized in that the terminal portions (44', 54') of the end pole pieces are constituted by a jacket formed by a metal sheet of a magnetic material of high resistivity and of permeability greater than about 200, arranged perpendicular to the lines of the magnetic field and joined by welding in fluid-tight manner to portions of glass or of metal of the wall (1) of the sealed enclosure.

5. Device according to claim 4, characterized in that the terminal portions (44', 54') have a thickness of the order of 0.3 to 0.5 mm and are constructed by means of a ferromagnetic alloy with a high content of noble metals such as invar or supra-anhyster.

6. Device according to any one of claims 1 to 5, characterized in that the position detectors (6, 7) are of the electromagnetic type and comprise an annular armature (63, 73) of laminated magnetic material mounted on the rotor and a stator composed of electromagnetic windings (62, 72) arranged outside the sealed enclosure and associated with a yoke (61, 71) of laminated magnetic material which has end pole pieces extended by a terminal portion (64, 74) of non-laminated material which constitutes directly a portion of the wall of the sealed enclosure and is attached by welding to continuous wall portions of glass.

7. Device according to claim 6, characterized in that the terminal portion (64, 74) of the position detectors (6, 7) is constituted by a ferrite rod.

8. Device according to any one of claims 4 and 5, characterized in that the terminal portions (44', 54') constituted by a magnetic metal sheet are attached to glass wall portions through sections of fluid-tight wall (14, 18) which have undulations capable of absorbing the differences in expansion of the sections of wall of glass and of metal.

9. Device according to any one of claims 1 to 8, applied to the construction of a rotary anode (21) shaft (2) of an X-ray tube, characterized in that it comprises in addition an asynchronous electric motor (3) comprising a rotor (33) fast to the drive shaft (2) of the anode and a stator (31, 32) located outside the sealed enclosure of which the portion situated facing the electric motor is of glass, in that the electromagnetic bearings (4, 5) are of the conical type, in that it comprises in addition an axial detector (9) of the position of the shaft (2), which axial detector comprises a stator composed of windings (92) associated with a yoke (91) of laminated magnetic material of which the end pole parts are extended by a terminal portion (94) of non-laminated magnetic material which constitutes directly a wall of the sealed enclosure and is attached by welding to continuous wall portions of glass, and in that the anode (21) is brought to ground potential.

10. Device according to any one of claims 1 to 9, characterized in that the air-gap between the terminal portions (44, 44'; 54, 54') of the end pole pieces of the yokes (41, 51) of the stators of the electromagnetic bearings and the corresponding annular armatures (43, 53) is comprised between about 0.4 and 0.8 mm.

Fig. 1

0 097 590

Fig.2

Fig.3

Fig. 4

0 097 590